# EUROPÄISCHE PATENTSCHRIFT

(11) **EP 1 966 000 B1**
(45) Veröffentlichungstag und Bekanntmachung des Hinweises auf die Patenterteilung: **24.08.2011**
(21) Anmeldenummer: 06841118.0
(22) Anmeldetag: 22.12.2006
(51) Int. Cl.: F04D 25/16, B60K 11/04, B60K 11/08, F01P 11/10, F04D 27/02

(54) **LÜFTERANORDNUNG BEI EINEM KRAFTFAHRZEUG**
FAN ARRANGEMENT IN A MOTOR VEHICLE
ARRANGEMENT DE VENTILATEUR POUR VÉHICULE AUTOMOBILE

(30) Priorität: 23.12.2005 DE 102005062366
(43) Veröffentlichungstag der Anmeldung: 10.09.2008
(73) Patentinhaber: Behr GmbH & Co. KG, 70469 Stuttgart (DE)
(72) Erfinder: HARICH, Martin, 25436 Heidegraben (DE); HÖGLINGER, Markus, 70619 Stuttgart (DE); SPIETH, Michael, 72810 Gomaringen (DE)
(86) Internationale Anmeldenummer: PCT/EP2006/012433
(87) Internationale Veröffentlichungsnummer: WO 2007/076973

(56) Entgegenhaltungen:
- EP-A- 0 236 216
- EP-A1- 0 979 745
- EP-A1- 1 251 324
- WO-A-2005/119024
- DE-U1- 20 211 857
- US-A- 4 979 584

## Beschreibung

Die Erfindung betrifft eine Lüfteranordnung bei einem Kraftfahrzeug gemäß dem Oberbegriff des Anspruchs 1.

Bei Kraftfahrzeugen sind üblicherweise Lüfter vorgesehen, welche Umgebungsluft ansaugen, damit die von den Wärmetauschern wie bspw. einem Kühlmittelkühler und/oder einem Kondensator abgegebene Wärme schnell abgeführt werden kann. Dabei sind die Lüfter - sofern nur ein Lüfter vorgesehen ist - üblicherweise zentral angeordnet, sind zwei oder mehr Lüfter vor einem Wärmetauscher angeordnet, so sind die Lüfter üblicherweise gleichmäßig verteilt angeordnet.

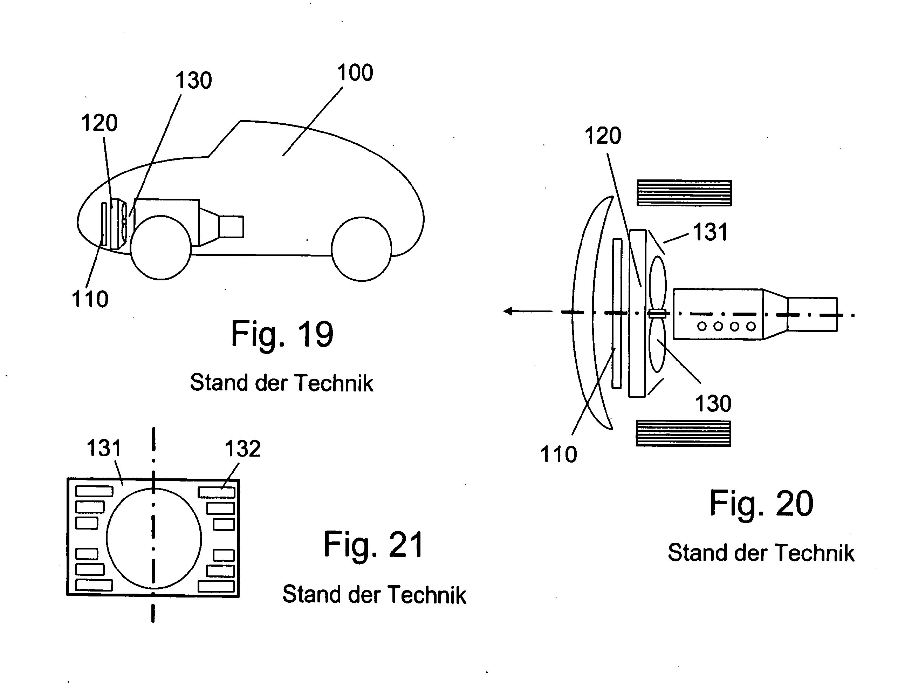

Bei herkömmlichen Kühleranordnungen sind ferner üblicherweise Kühlmittelkühler und Kondensator hintereinander angeordnet, wobei die Stirnflächen gleich, aber auch unterschiedlich groß ausgebildet sein können. Eine schematische Darstellung einer derartigen herkömmlichen Kühleranordnung ist in den Figuren 19 und 20 dargestellt. Hierbei ist in einem Kraftfahrzeug 100 hinter einem Kühlergrill ein Kondensator 110 und parallel hierzu - in Fahrtrichtung gesehen hinter dem Kondensator 110 - ein Kühlmittelkühler 120 angeordnet, wobei gemäß der Darstellung in den Figuren 22 bis 24 - in Fahrtrichtung des Kraftfahrzeugs 100 gesehen hinter dem Kühlmittelkühler 120 - ein Lüfter 130 zentral vor den Wärmetauschern angeordnet ist, welcher Luft ansaugt. Die Lüfterhaube 131 weist mehrere Staudruckklappen 132 auf, die in den Seitenbereichen angeordnet sind. An Stelle von einem Lüfter können auch (üblicherweise gleichmäßig verteilt) mehrere Lüfter vorgesehen sein. Alternativ können auch ein oder mehrere Lüfter vorgesehen sein, welche die Luft durch die Kühler 110 und 120 drücken, d.h. die Lüfter sind in Fahrtrichtung des Kraftfahrzeugs vor den Kühlem angeordnet.

Bei höheren Fahrtgeschwindigkeiten wird auf Grund des Staudrucks vor dem Kraftfahrzeug mehr Luft durch den oder die Wärmetauscher gefördert, als der Lüfter auch bei maximaler Drehzahl fördern kann. Der Lüfter wirkt daher bei hohen Fahrtgeschwindigkeiten sogar als Strömungswiderstand. Aus diesem Grund sind Staudruckklappen bekannt, die sich ab einem bestimmten Staudruck selbsttätig öffnen und so zusätzliche Luft durch die Lüfterhaube und den oder die Wärmetauscher strömen lassen. Die Staudruckklappen sind üblicherweise in äußeren Bereichen der Lüfterhaube angeordnet, wobei der Lüfter in der Mittellängsebene des Kraftfahrzeugs angeordnet ist. Die DE 20 2004 010 030 U1 offenbart eine Lüfterhaube mit zentraler Öffnung für den Lüfter und Sollbruchstellen in der Lüfterhaube für nachträglich einbaubare Staudruckklappen. Eine derartige Lüfteranordnung mit Staudruckklappen lässt jedoch noch Wünsche offen.

WO 2005/119024 offenbart eine weitere Lüftenanordnung, mit den Merkmalen gemäß dem einleitenden Teil des Anspruchs 1.

Es ist Aufgabe der Erfindung, eine verbesserte Lüfteranordnung zur Verfügung zu stellen.

Diese Aufgabe wird gelöst durch eine Lüfteranordnung mit den Merkmalen des Anspruchs 1. Vorteilhafte Ausgestaltungen sind Gegenstand der Unteransprüche.

Ein Beispiel für eine mögliche Ausgestaltung von Staudruckklappen ist in der DE 42 38 679 A1 offenbart, deren Offenbarungsgehalt in Hinblick auf die Konstruktion der Staudruckklappen ausdrücklich mit einbezogen wird, jedoch sind vorliegend auch andere Ausgestaltungen der Staudruckklappen möglich.

Bevorzugt sind mehrere Staudruckklappen vorgesehen, wobei alle oder zumindest mehrere derselben in einer vertikal verlaufenden Reihe angeordnet sind. Bevorzugt sind die Staudruckklappen baugleich ausgebildet, jedoch können die Staudruckklappen auch in ihren Abmessungen an den vorhandenen Bauraum der Lüfterhaube angepasst sein.

Um eine möglichst große Luftmasse bei großer Fahrtgeschwindigkeit zur Verfügung stellen zu können, ist bevorzugt der gesamte Bauraum, d.h. die gesamte Fläche der Lüfterhaube ausgenutzt, so dass vorzugsweise mindestens eine Staudruckklappe in einer der Ecken der Lüfterhaube angeordnet ist.

Bevorzugt ist die Lüfterhaube einteilig ausgebildet, jedoch kann die Lüfterhaube auch mehrteilig ausgebildet sein, insbesondere wenn eine Kühleranordnung vorgesehen ist, bei der zwei (oder mehr) Kühler nebeneinander und nicht hintereinander angeordnet sind.

Die Lüfteranordnung dient vorzugsweise zur Kühlung einer Kühleranordnung mit mindestens zwei luftgekühlten Kühlem, wobei die Kühler vorzugsweise horizontal direkt nebeneinander angeordnet sind. Dadurch, dass die beiden Kühler (oder ggf. auch mehr als zwei Kühler) nebeneinander und nicht hintereinander angeordnet sind, fällt die gegenseitige aerodynamische und thermodynamische Beeinflussung der beiden Kühler weg. Ferner wird der Luftmassenstrom erhöht, da die Luft nur durch einen Kühler strömen muss (zumindest sofern kein weiterer Kühler vor oder hinter dem Kühler angeordnet ist). Der höhere Luftmassenstrom kann die kleineren zur Verfügung stehenden Stirnflächen und - bei einer tieferen Bauform - einen ggf. etwas höheren Druckabfall kompensieren. Fehlluftströme zwischen den Kühlem, wie sie bei herkömmlichen Kühleranordnungen auftreten, wenn sie nicht zusätzlich abgedichtet werden, können ohne zusätzlichen Aufwand vermieden werden. Die Kühler können - unabhängig von einander - als Fallstrom- oder Querstromwärmetauscher ausgebildet sein, wobei Umlenkungen in der Tiefe und/oder Breite möglich sind.

Bevorzugt ist die Kante der Kühler, an welcher sie miteinander verbunden sind oder sich am nächsten sind, in oder zumindest nahe der Mittellängsebene des Kraftfahrzeugs angeordnet, also auch bevorzugt im Bereich der Staudruckklappe(n). Dabei müssen die beiden (oder mehr) Kühler nicht flächengleich ausgebildet sein, sie können insbesondere unterschiedlich breite und/oder hohe von Luft durchströmte Wärmetauschflächen aufweisen. Gegenüber untereinander angeordneten Kühlern ermöglicht die Anordnung nebeneinander eine kürzere und kompaktere Ausgestaltung der Kühler, wobei zudem der vorhandene Bauraum, vorgegeben durch einen in der Regel gekrümmt ausgebildeten Stoßfänger, durch eine geneigte Anordnung zueinander optimal genutzt werden kann.

In Folge der geringeren Bautiefe der nebeneinander angeordneten Kühler kann die Zarge tiefer und somit strömungsgünstiger konstruiert sein. Ein weiterer Vorteil einer geringeren Bautiefe der Kühleranordnung ist, dass der vordere Fahrzeugüberhang verkürzt werden kann oder der deformierbare, energieabsorbierende Bereich nach innen ausgedehnt werden kann, um Fußgänger im Falle eines Aufpralls besser zu schützen. Bei einem unverändert ausgebildeten Fahrzeugüberhang bleibt die Kühleranordnung auch bei einem Crash bei relativ hohen Geschwindigkeiten noch unbeschädigt.

Auf Grund der kleineren Stirnfläche der Kühler und der damit verbundenen höheren Packungsdichte und verringerten Anzahl von Verpackungseinheiten wird der logistische Aufwand verkleinert.

Die Kühler sind vorzugsweise senkrecht zur Luftanströmrichtung angeordnet, wobei sie auch geneigt in einem Winkel von maximal +/- 20°, vorzugsweise maximal 15°, zur Vertikalen und/oder zu einer vertikalen Ebene, die senkrecht zur Mittellängsebene des Kraftfahrzeugs verläuft, angeordnet sein können, wobei noch eine gute Anströmung sichergestellt ist.

Bevorzugt handelt es sich bei den Kühlem, die nebeneinander angeordnet sind, um einen Kondensator (Gaskühler) und einen Kühlmittelkühler. Neben, hinter, vor, oberhalb oder ggf. auch unterhalb oder in den Radkästen können weitere Kühler vorgesehen sein, wie bspw. ein oder mehrere Ölkühler (bspw. für Motoröl, Getriebeöl, Lenkhilfe und/oder Fahrwerkshydraulik) und/oder ein Ladeluftkühler und/oder ein Kraftstoffkühler und/oder ein ABC-Kühler etc.. Diese Kühler können die unterschiedlichsten Stirnflächen und Tiefen aufweisen.

Bevorzugt sind die nebeneinander angeordneten Kühler derart angeordnet, dass die Schmalseiten der Kühler, die einander zugewandt sind, im Wesentlichen in der Mittellängsebene des Kraftfahrzeugs angeordnet sind, jedoch ist insbesondere bei unterschiedlichen Breiten der Kühler auch eine außermittige Anordnung möglich, wobei jedoch die Kühler nebeneinander und ohne einen wesentlichen Abstand zueinander angeordnet sind.

Bevorzugt ist bei einer Kühleranordnung mit zwei nebeneinander angeordneten Kühlem jedem Kühler mindestens ein Lüfter zugeordnet.

Ebenfalls sind Anordnungen möglich, bei denen einem der Kühler (oder beiden Kühlem jeweils) bspw. zwei Lüfter zugeordnet sind. Bei den Lüftern handelt es sich üblicherweise um elektrisch oder durch den Fahrzeugmotor mechanisch angetriebene Lüfter, jedoch sind auch andere Antriebe für die Lüfter möglich, bspw. hydraulische Antriebe. Dabei können die Lüfter individuell optimiert werden, so dass sich die Gesamtkosten für Lüfter optimieren lassen.

Die Kühler sind vorzugsweise auf der Lüftanströmseite und/oder der Luftabströmseite in einer gemeinsamen Ebene endend angeordnet, wodurch sich die Ausrichtung und die Konstruktion der Halterungen für die Kühler vereinfacht.

Für eine thermodynamische Trennung zwischen den beiden Kühlern kann ein Trennsteg oder eine Trennwand angeordnet sein, so dass Querströmungen der Luft verhindert werden.

Die Kühler und/oder Lüfter der Kühleranordnung sind vorzugsweise in einem Winkel von maximal +/- 20°, insbesondere +/- 10°, zur Vertikalen geneigt angeordnet. Dabei können Kühler und Lüfter auch in unterschiedliche Richtungen geneigt sein, also bspw. der Kühler mit seiner Oberkante nach vorne, also in Fahrtrichtung, und der Lüfter nach hinten. Die Schrägstellung der Kühler und/oder Lüfter ermöglicht eine Optimierung der Luftströmung, so dass die Förderleistung der Lüfter optimiert werden kann. Die Schrägstellung der Lüfter und damit das Erreichen des vorstehend genannten Vorteils wird insbesondere durch die verringerte Bautiefe gegenüber herkömmlichen Kühleranordnungen mit zwei hintereinander angeordneten Kühlem ermöglicht.

Bevorzugt sind die Drehachsen der zwei (oder mehr) Lüfter parallel verlaufend oder sich vor dem Stoßfänger schneidend angeordnet. Insbesondere eine Anordnung, bei der sich die Drehachsen schneiden, ermöglicht eine gute Luftableitung, so dass sich unter der Motorhaube ein Staudruck bildet.

Die Lüfter sind vorzugsweise luftabströmseitig der Kühler angeordnet, d.h. bei dem Lüftern handelt es sich um Lüfter, die Luft durch die entsprechenden Kühler saugen.

Bei einer vorteilhaften Ausführungsform sind die Lüfter luftzuströmseitig der Kühler angeordnet, d.h. bei dem Lüftern handelt es sich um Lüfter, die Luft durch die entsprechenden Kühler drücken.

Bevorzugt ist für mindestens zwei Lüfter eine einzige, durchgehende Lüfterhaube vorgesehen, wodurch sich die Anzahl der zu herzustellenden und zu montierenden Teile verringert. Im Falle eines modularen Aufbaus, bei dem bspw. auf Grund unterschiedlicher Kühlleistungsanforderungen unterschiedliche Kühler miteinander kombiniert werden können, ist jedoch vorteilhaft, wenn jedem Kühler ein Lüfter samt Lüfterhaube/Lüfterzarge zugeordnet ist, die so eine Einheit bilden.

Im Folgenden wird eine erfindungsgemäße Lüfteranordnung anhand mehrerer Ausführungsbeispiele unter Bezugnahme auf die Zeichnung im Einzelnen erläutert. In der Zeichnung zeigen:
- Fig. 1: eine schematische Darstellung einer Lüfteranordnung für ein Kraftfahrzeug gemäß dem ersten Ausführungsbeispiel mit Blickrichtung in Fahrtrichtung,
- Fig. 2: eine Draufsicht auf die Lüfteranordnung von Fig. 1,
- Fig. 3: eine Draufsicht auf die Lüfter- und Kühleranordnung von Fig. 1 mit Darstellung des Staudruckprofils bei einer hohen Fahrtgeschwindigkeit,
- Fig. 4: eine schematische Darstellung einer Lüfteranordnung für ein Kraftfahrzeug gemäß dem zweiten Ausführungsbeispiel mit Blickrichtung in Fahrtrichtung,
- Fig. 5: eine Draufsicht auf die Lüfteranordnung von Fig. 4,
- Fig. 6: eine schematische Darstellung einer Lüfteranordnung für ein Kraftfahrzeug gemäß dem dritten Ausführungsbeispiel mit Blickrichtung in Fahrtrichtung,
- Fig. 7: eine Draufsicht auf die Lüfteranordnung von Fig. 6,
- Fig. 8: eine schematische Darstellung einer Lüfteranordnung für ein Kraftfahrzeug gemäß einer Variante des zweiten Ausführungsbeispiel mit Blickrichtung in Fahrtrichtung,
- Fig. 9: eine Draufsicht auf die Lüfteranordnung von Fig. 8,
- Fig. 10: eine schematische Darstellung einer Lüfteranordnung für ein Kraftfahrzeug gemäß dem vierten Ausführungsbeispiel mit Blickrichtung in Fahrtrichtung,

- Fig. 11: eine Draufsicht auf die Lüfteranordnung von Fig. 10,
- Fig. 12: eine schematische Darstellung einer herkömmlichen Lüfterund Kühleranordnung,
- Fig. 13: eine schematische Darstellung einer Lüfter- und Kühleranordnung,
- Fig. 14: eine schematische Darstellung einer Hälfte einer zweiteiligen Lüfterhaube mit Staudruckklappen gemäß einer weiteren Variante des zweiten Ausführungsbeispiels,
- Fig. 15: eine schematische Darstellung einer Hälfte einer zweiteiligen Lüfterhaube mit Staudruckklappen gemäß einem fünften Ausführungsbeispiel,
- Fig. 16: eine schematische Darstellung einer Hälfte einer zweiteiligen Lüfterhaube mit Staudruckklappen gemäß einem sechsten Ausführungsbeispiel,
- Fig. 17: schematische Darstellungen der vertikalen Ausrichtung der Kühler- und Lüfteranordnung,
- Fig. 18: eine Detaildarstellung einer Lüfter- und Kühleranordnung ohne Darstellung der Staudruckklappen gemäß einem siebten Ausführungsbeispiel,
- Fig. 19: eine schematische Darstellung eines Kraftfahrzeugs mit einer herkömmlichen Lüfter- und Kühleranordnung,
- Fig. 20: eine Draufsicht auf die Lüfter- und Kühleranordnung von Fig. 19, und
- Fig. 21: eine Frontansicht der Lüfteranordnung von Fig. 19.

Bei einer Lüfteranordnung 1 eines Kraftfahrzeugs sind zwei vorzugsweise als Gleichteile ausgebildete Lüfter 30 in einer gemeinsamen, durchgehend ausgebildeten und spiegelbildlich zur Fahrzeugmittellängsebene (angedeutet durch eine Strich-Punkt-Linie) ausgebildeten Lüfterhaube 31 angeordnet. Die Lüfterhaube 31 weist Öffnungen für die Lüfter 30 sowie Öffnungen für selbsttätig öffnende und schließende Staudruckklappen 32 auf, wobei die Staudruckklappen 32 in der Mittellängsebene des Fahrzeugs übereinander in einer Reihe angeordnet sind und die beiden Öffnungen für die Lüfter 30 voneinander trennen, wodurch die Lüfter 30 seitlich nach außen bezüglich der Mittellängsebene des Fahrzeugs verschoben sind.

Die Lüfteranordnung 1 ist in Luftströmungsrichtung hinter einer Kühleranordnung 1' angeordnet, wobei die Kühleranordnung 1' gemäß dem ersten Ausführungsbeispiel ein Kondensator 10 und ein Kühlmittelkühler 20 hinter einander vor der Lüfteranordnung 1 angeordnet sind. Vor dem Kondensator 10 ist ein Kühlergrill oder Stoßfänger 40 angeordnet, durch welchen die Luft zu den beiden Kühlern 10 und 20 und der Lüfteranordnung 1 gelangt. Hierbei handelt es sich bei der Kühleranordnung 1' gemäß dem ersten Ausführungsbeispiel um eine herkömmliche Kühleranordnung.

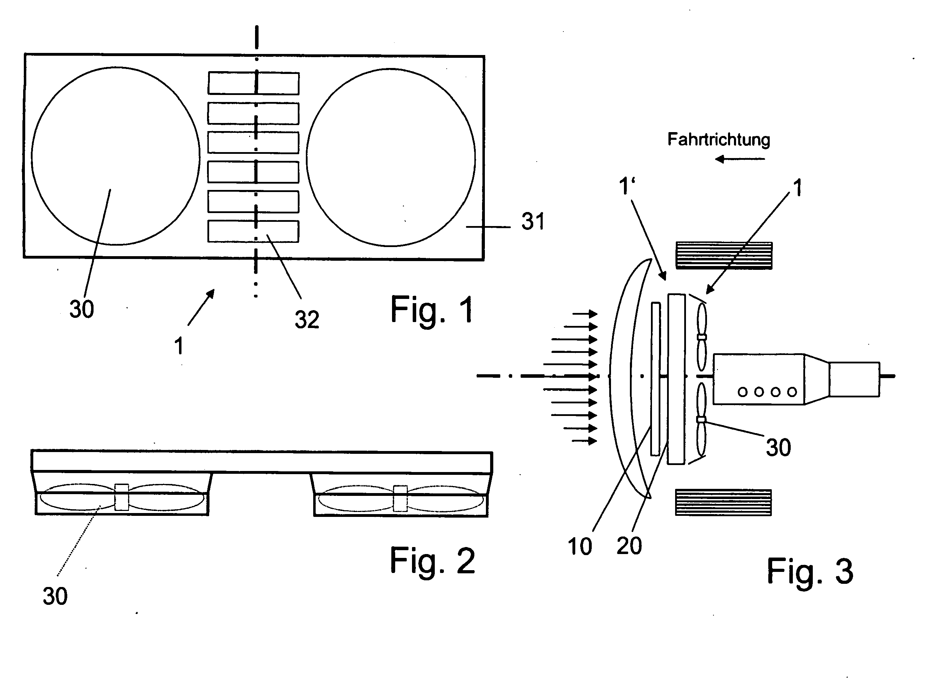

Die Fahrtrichtung des Kraftfahrzeugs ist in Fig. 3 durch einen Pfeil dargestellt, der Staudruck der Luft bei einem sich in schneller Fahrt bewegenden Kraftfahrzeug ist in Fig. 3 durch eine Pfeilschar dargestellt. Aus der Pfeilschar ist ersichtlich, dass in der Mittellängsebene des Fahrzeugs der größte Staudruck herrscht, während der Staudruck nach außen hin abnimmt. Da die Staudruckklappen 32 gemäß dem vorliegenden Ausführungsbeispiel ausschließlich im mittleren Bereich, d.h. im Bereich der Fahrzeugmittellängsebene, angeordnet sind und deren Schließkraft auf einen minimalen Staudruck pₘᵢₙ eingestellt ist, öffnen diese ab einem entsprechend hohen Staudruck, so dass Luft durch die offenen Staudruckklappen 32 und die vor denselben angeordneten Kühler 10 und 20 strömen kann. Bei sehr hohen Fahrtgeschwindigkeiten gelangt ein wesentlicher Teil der Luft, die durch die Kühler 10 und 20 strömt, durch die Staudruckklappen 32 und nicht durch die Lüfter 30, während bei sehr geringen Fahrtgeschwindigkeiten, bei denen der Staudruck unter dem minimalen Staudruck pₘᵢₙ liegt, ab welchem die Staudruckklappen 32 öffnen, die Luft ausschließlich durch die Lüfter 30 strömt.

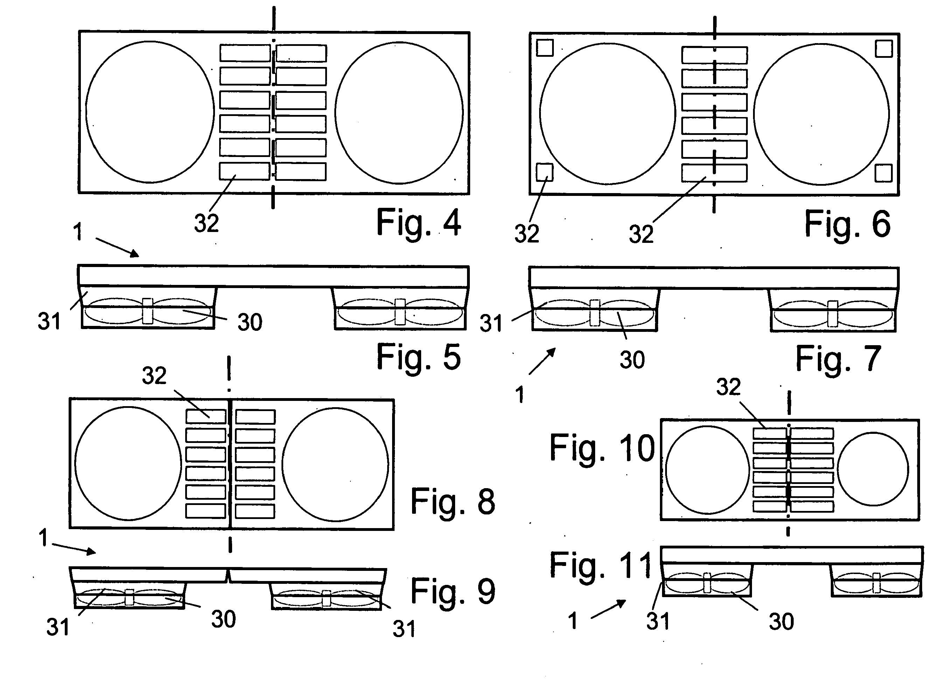

Gemäß dem zweiten, in den Figuren 4 und 5 dargestellten Ausführungsbeispiel ist die Lüfterhaube 31 wiederum durchgehend ausgebildet, wobei hinter der Lüfterhaube 31 zwei vorzugsweise als Gleichteile ausgebildete Lüfter 30 vorgesehen sind, die auf einer Höhe und - entsprechend dem ersten Ausführungsbeispiel - nach außen versetzt angeordnet sind. Zwischen den Öffnungen der Lüfterhaube 31 für die Lüfter 30 sind zwei parallel angeordnete, in vertikaler Richtung verlaufende Reihen von Staudruckklappen 32 angeordnet, wobei vorliegend je sechs Staudruckklappen 32 in einer Reihe vorgesehen sind. Sämtliche Staudruckklappen 32 sind vorzugsweise als Gleichteile ausgebildet.

Gemäß dem dritten, in den Figuren 6 und 7 dargestellten Ausführungsbeispiel ist eine Anordnung der Öffnungen für die Lüfter 30 und Staudruckklappen 32 entsprechend dem ersten Ausführungsbeispiel vorgesehen, wobei zusätzlich je eine kleiner ausgebildete Staudruckklappe 32 in den Ecken der Lüfterhaube 31 angeordnet ist, um die Gesamtfläche optimal auszunutzen.

Die Lüfterhaube 31 ist gemäß dem in den Figuren 8 un 9 dargestellten, vierten Ausführungsbeispiel zweiteilig ausgebildet, wobei die Staudruckklappen 32 auf der Seite der Lüfterhaube 31 angeordnet sind, die in der Nähe der Fahrzeugmittellängsebene angeordnet ist. Abgesehen von der zweiteiligen Ausgestaltung entspricht die Anordnung ansonsten der des zweiten Ausführungsbeispiels.

In den Figuren 10 und 11 ist eine einstückig ausgebildete Lüfterhaube 31 für zwei Lüfter 30 dargestellt, wobei die Lüfter 30 unterschiedliche Laufraddurchmesser aufweisen. Entsprechend sind die Öffnungen für die Lüfter 30 in der Lüfterhaube 31 unterschiedlich groß ausgebildet. Auch die Staudruckklappen sind unterschiedlich breit ausgebildet, wobei die Staudruckklappen 32 in zwei Reihen angeordnet und die einzelnen Staudruckklappen 32 jeweils gleich weit von der Mittellängsebene des Kraftfahrzeugs beabstandet zwischen den Öffnungen für die Lüfter 30 angeordnet sind, so dass sich insgesamt eine asymmetrische Ausgestaltung der Lüfteranordnung 1 ergibt.

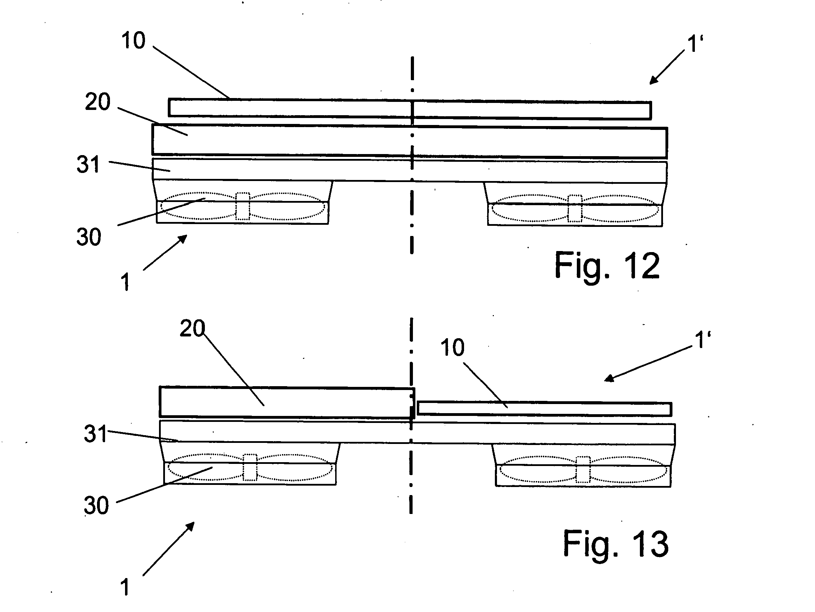

Die Kühleranordnung 1' der Kühler 10 und 20 ist - gemäß den vorstehend beschriebenen Ausführungsbeispielen entsprechend der Darstellung von Fig. 12 ausgebildet, jedoch können die Kühler 10 und 20 auch entsprechend der Darstellung von Fig. 13, also nebeneinander, angeordnet sein, wobei diese Kühleranordnung 1' im Folgenden näher erläutert wird, da sie besonders geeignet ist für geteilte und/oder asymmetrische Lüfteranordnungen 1.

Wie aus Fig. 13 ersichtlich, sind die Kühler 10 und 20, wobei es sich beim Kühler 10 vorliegend um einen Kühlmittelkühler und beim Kühler 20 vorliegend um einen Kondensator handelt, im Wesentlichen gleich breit und hoch ausgebildet, jedoch unterscheiden sie sich in ihrer Bautiefe. Die beiden Kühler 10 und 20 sind nebeneinander angeordnet, wobei jeweils eine ihrer beiden vertikalen Schmalseiten in direkter Nachbarschaft voneinander und in oder nahe der Fahrzeugmittellängsebene verlaufend angeordnet ist. Die Stirnflächen der Kühler 10 und 20 enden vorliegend in unterschiedlichen Ebenen, jedoch können auch eine (oder beide) oder beide Stirnflächen in der gleichen Ebene liegen.

Den beiden Kühlem 10 und 20 ist - in Luftströmungsrichtung gesehen - eine gemeinsame, einstückig ausgebildete Lüfterhaube 31 mit zwei vorzugsweise als Gleichteilen ausgebildeten Lüftern 30 nachgeordnet.

Gemäß einer in Hinblick auf die Kühlleistung optimierten Variante sind die beiden Lüfter unterschiedlich ausgebildet, wobei jeder Lüfter in seiner Geometrie (bspw. Laufraddurchmesser, Schaufelzahl und Anstellwinkel) und Leistung (Motordrehzahl und elektrischen Motoraufnahmeleistung) an den Bedarf des entsprechenden (Kühl-/Kälte-)Kreislaufs angepasst ist. Dabei erfolgt auch die Regelung der Drehzahlen der Lüfter unabhängig voneinander, wobei im Motorleerlauf, d.h. bei fehlendem Fahrtwind, der dem Kühlmittelkühler zugeordnete Lüfter wegen der geringen Abwärme des Motors kaum laufen muss (getakteter Betrieb oder Betrieb bei geringer Drehzahl), während - bei laufender Klimaanlage - der Kondensator einen großen Kühlbedarf hat, so dass der entsprechende Lüfter mit hoher Drehzahl betrieben werden muss, um den fehlenden Fahrtwind auszugleichen. Bei hohen Fahrtgeschwindigkeiten ist jedoch - ggf. auch ohne Staudruckklappen - ausreichend Kühlleistung für den Kondensator vorhanden, während der Kühlmittelkühler einen erhöhten Kühlbedarf hat, so dass insbesondere im Bereich der Mittellängsebene des Kraftfahrzeugs im Bereich des Kühlmittelkühlers vorzugsweise eine Mehrzahl von Staudruckklappen vorgesehen sind.

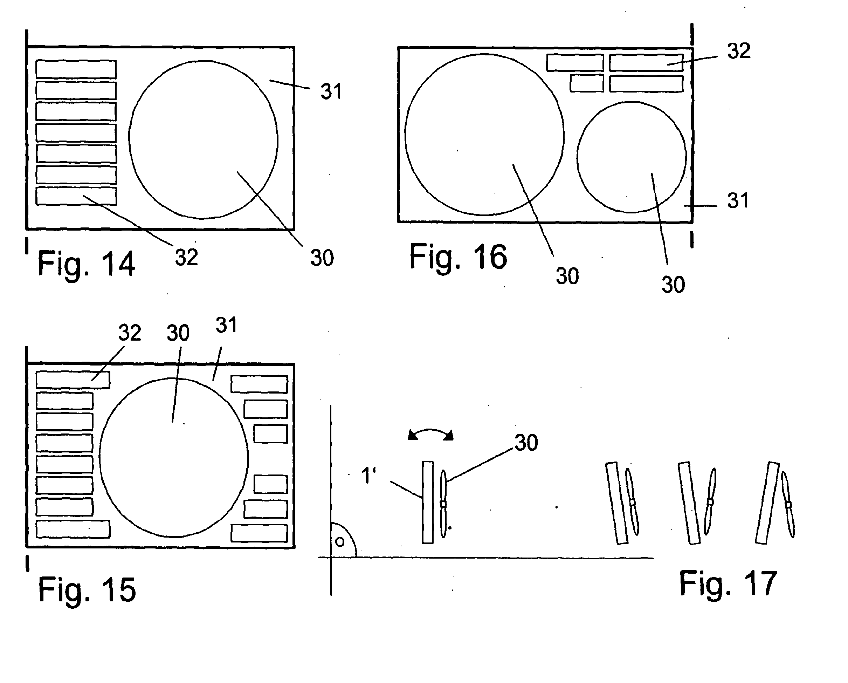

In den Figuren 14 bis 16 sind verschiedene mögliche Anordnungen von Staudruckklappen 32 und Lüfter 30 dargestellt, wobei jeweils nur eine Hälfte einer Lüfterhaube 31 dargestellt ist. Die andere Hälfte der Lüfterhaube 31 kann spiegelsymmetrisch zur als Strich-Punkt-Linie angedeuteten Mittellängsebene des Kraftfahrzeugs ausgebildet sein, jedoch können auch verschiedene Anordnungen miteinander kombiniert sein, wobei jeweils die Mehrzahl der Staudruckklappen 32 in direkter Nachbarschaft zur Mittellängsebene des Kraftfahrzeugs angeordnet sind.

So zeigt Fig. 14 eine Hälfte einer Lüfteranordnung 1, die im Wesentlichen, d.h. abgesehen von der Anzahl der Staudruckklappen 32, der in den Figuren 8 und 9 dargestellten Variante des zweiten Ausführungsbeispiels entspricht.

Fig. 15 zeigt ein Ausführungsbeispiel, bei dem auch außenseitig (kleinere) Staudruckklappen vorgesehen sind. Diese Anordnung von Staudruckklappen ist insbesondere bei breiten Lüfterhauben sinnvoll, um im Bedarfsfall eine große Luftmenge die Kühler durchströmen zu lassen. Die größere Öffnung wird hierbei von den in der Fahrzeugmittellängsebene angeordneten Staudruckklappen freigegeben.

In Fig. 16 ist ein Ausführungsbeispiel dargestellt, bei welchem zwei Lüfter 30 vorgesehen sind. Hierbei ist der näher an der Fahrzeugmittellängsebene angeordnete Lüfter 30 kleiner ausgebildet als der seitlicher angeordnete Lüfter 30. Vorliegend sind in der Lüfterhaube 31 oberhalb des kleineren Lüfters 30 vier Staudruckklappen 32 vorgesehen, deren Größe in Hinblick auf die zur Verfügung stehende Lüfterhaubenfläche optimiert ist.

An Stelle einer zweiteiligen Ausgestaltung der Lüfterhaube 31, wie sie in den Figuren 14 bis 16 dargestellt ist, kann auch eine einteilige Ausgestaltung der Lüfterhaube vorgesehen sein.

In Fig. 17 sind beispielhaft verschiedene Neigungsanordnungen der Kühleranordnung 1' und der Lüfter 30 dargestellt. Hierbei ist im linken Teil von Fig. 17 die vertikale Anordnung der Kühleranordnung 1' und die hierzu parallele Anordnung des oder der Lüfter 30, d.h. mit einer horizontal verlaufenden Drehachse, dargestellt. Alternativ kann die gesamte Anordnung beispielsweise nach vorne gekippt werden. Ebenfalls können nur die Kühleranordnung 1' nach vorne gekippt werden, während der bzw. die Lüfter eine schräg nach unten verlaufenden Drehachse aufweisen, also nach hinten gekippt sind. Ebenfalls ist eine Neigungsanordnung möglich, gemäß der die Kühleranordnung 1' nach hinten und der oder die Lüfter 30 nach vorne gekippt sind. Die dargestellten Neigungswinkel sind nur beispielhaft, vorzugsweise liegen die Neigungswinkel in einem Bereich von +/- 20°, insbesondere +/-10°.

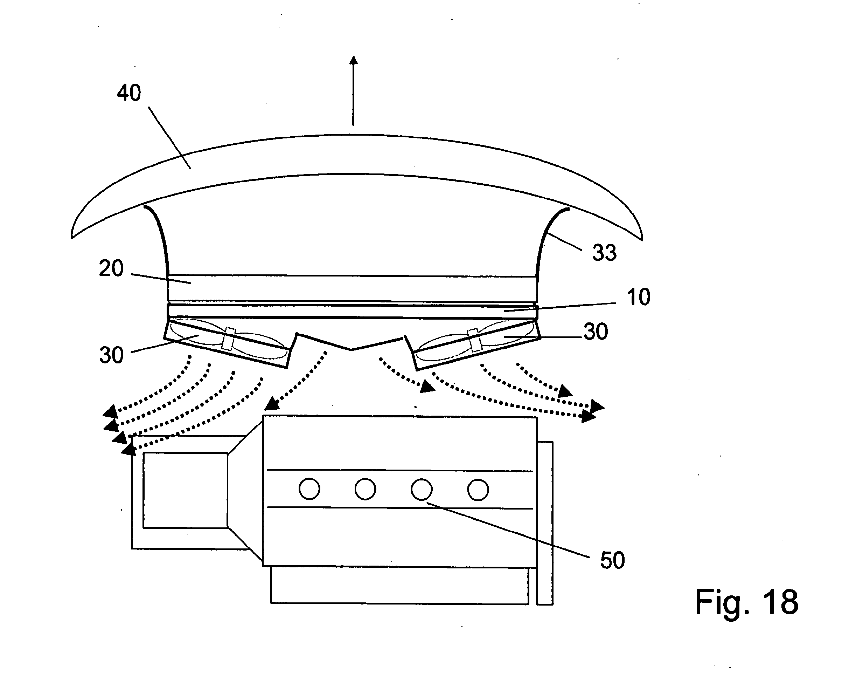

Fig. 18 zeigt ein siebtes Ausführungsbeispiel einer Lüfteranordnung 1 in Verbindung mit einer Kühleranordnung 1', gemäß dem die beiden Kühler 10 und 20 lufteintrittsseitig hintereinander angeordnet, jedoch sind die Lüfter 30 derart angeordnet, dass sich zwei Geraden, die entlang der Lüfter 30 derselben verlaufen, an einem Punkt vor dem Stoßfänger 40 schneiden. Um eine derartige Anordnungen der Lüfter zu ermöglichen, ist die Lüfterhaube 31 entsprechend ausgebildet, wobei im mittleren Bereich ein Knick in der Frontfläche der Lüfterhaube 31 vorgesehen ist, so dass die Staudruckklappen, die in diesem Bereich angeordnet sind, in unterschiedlichen Ebenen, welche sich schneiden, angeordnet sind. Lufteintrittsseitig sind außenseitig vor der Kühleranordnung 1' starre Luftleitelemente 33 vorgesehen.

Vorliegend ist eine durchgehende Lüfterhaube 31 vorgesehen. In Fig. 18 ist zudem eine Antriebseinheit 50, d.h. vorliegend ein quer angeordneter Motor mit Getriebe, und der Strömungsverlauf der die Kühler 10 und 20 durchströmenden Luft durch zwei Kurvenscharen dargestellt. In Folge der schrägen Anordnung der Lüfter 30 ergibt sich eine verbesserte Abströmung der Luft, vorbei an der Antriebseinheit 50. Bei hohen Fahrtgeschwindigkeiten ergibt sich durch die Staudruckklappen (nicht näher dargestellt) im mittleren Bereich eine günstige Strömungsausgestaltung.

Eine entsprechende Anordnung ist auch in Verbindung mit nebeneinander angeordneten Kühlem möglich, insbesondere auch, wenn die Kühler geneigt angeordnet sind.

Die vorliegende Erfindung wurde am Beispiel eines Kondensators beschrieben. Die Verwendung eines Gaskühlers anstelle oder zusätzlich zu dem Kondensator ist jedoch bei sämtlichen Ausführungsbeispielen möglich, ohne den Rahmen der vorliegenden Erfindung zu verlassen.

## Patentansprüche

1. Lüfteranordnung für ein Kraftfahrzeug (100), mit mindestens zwei Lüftern (30), die zur Kühlung einer Kühleranordnung (1') mit mindestens einem Kühler (10; 20) dienen und in mindestens einer Lüfterhaube (31) angeordnet sind, wobei die Lüfterhaube (31) mindestens eine Staudruckklappe (32) aufweist, wobei die Staudruckklappe (32) oder die Staudruckklappen (32) einer Seite bezüglich der Mittellängsebene des Kraftfahrzeugs im Mittel näher an der Mittellängsebene des Kraftfahrzeugs (100) angeordnet sind als der oder die Lüfter (30) der entsprechenden Seite, **dadurch gekennzeichnet, dass** die Staudruckklappen zwischen den Lüftern angeordnet sind.

2. Lüfteranordnung nach Anspruch 1, **dadurch gekennzeichnet, dass** mehrere Staudruckklappen (32) vorgesehen sind, wobei mehrere derselben in einer vertikal verlaufenden Reihe angeordnet sind.

3. Lüfteranordnung nach Anspruch 1 oder 2, **dadurch gekennzeichnet, dass** mindestens eine Staudruckklappe (32) in einer der Ecken der Lüfterhaube (31) angeordnet ist.

4. Lüfteranordnung nach einem der vorhergehenden Ansprüchen, **dadurch gekennzeichnet, dass** die Lüfterhaube (31) einteilig ausgebildet ist.

5. Lüfteranordnung nach einem der vorhergehenden Ansprüchen, **dadurch gekennzeichnet, dass** die Lüfteranordnung (1) zur Kühlung der Kühleranordnung (1') mit mindestens zwei luftgekühlten Kühlern (10; 20) dient, wobei die Kühler (10; 20) horizontal direkt nebeneinander angeordnet sind.

6. Lüfteranordnung nach Anspruch 5, **dadurch gekennzeichnet, dass** die Kühler (10; 20) senkrecht zur Luftanströmrichtung +/- 20° angeordnet sind.

7. Lüfteranordnung nach Anspruch 5 oder 6, **dadurch gekennzeichnet, dass** der erste Kühler ein Kondensator (10) und der daneben angeordnete, zweite Kühler ein Kühlmittelkühler (20) ist.

8. Lüfteranordnung nach einem der Ansprüche 5 bis 7, **dadurch gekennzeichnet, dass** die nebeneinander angeordneten Kühler (10; 20) derart angeordnet sind, dass die Schmalseiten der Kühler (10; 20), die einander zugewandt sind, im Wesentlichen in der Mittellängsebene des Kraftfahrzeugs angeordnet sind.

9. Lüfteranordnung nach einem der Ansprüche 5 bis 8, **dadurch gekennzeichnet, dass** jedem Kühler (10; 20) mindestens ein Lüfter (30) zugeordnet ist

10. Lüfteranordnung nach einem der vorhergehenden Ansprüche, **dadurch gekennzeichnet, dass** die Kühler (10; 20) und/oder Lüfter in einem Winkel von maximal +/- 20°, insbesondere +/- 10°, zur Vertikalen geneigt sind.

11. Lüfteranordnung nach einem der vorhergehenden Ansprüche, **dadurch gekennzeichnet, dass** die Drehachsen der Lüfter (30) parallel verlaufend oder sich vor dem Stoßfänger (50) schneidend angeordnet sind.

12. Lüfteranordnung nach einem der vorhergehenden Ansprüche, **dadurch gekennzeichnet, dass** die Lüfter (30) luftabströmseitig der Kühler (10; 20) angeordnet ist.

13. Lüfteranordnung nach einem der vorhergehenden Ansprüche 1-11, **dadurch gekennzeichnet, dass** die Lüfter (30) luftzuströmseitig der Kühler (10; 20) angeordnet ist.

14. Lüfteranordnung nach einem der vorhergehenden Ansprüche, **dadurch gekennzeichnet, dass** für mindestens zwei Lüfter (30) eine einzige, einstückig ausgebildete, durchgehende Lüfterhaube (31) vorgesehen ist.

## Claims

1. & fan arrangement for a motor vehicle (100), comprising at least two fans (30) which are used to cool a cooling assembly (1') having at least one cooling element (10; 20), and which are disposed in at least one fan hood (31), wherein the fan hood (31) comprises at least one dynamic-pressure flap (32), wherein the dynamic-pressure flap (32) or the dynamic-pressure flaps (32) on one side are disposed, on average and relative to the central longitudinal plane of the motor vehicle, closer to the central longitudinal plane of the motor vehicle (100) than the fan(s) (30) of the corresponding side, **characterized in that** the dynamic-pressure flaps are disposed between the fans.

2. The fan arrangement according to claim 1, **characterized in that** a plurality of dynamic-pressure flaps (32) is provided, wherein a plurality of the same are disposed in a vertically extending row.

3. The fan arrangement according to claim 1 or 2, **characterised in that** at least one dynamic-pressure flap (32) is disposed in one of the corners of the fan hood (31).

4. The fan arrangement according to one of the preceding claims, **characterized in that** the fan hood (31) is designed as one piece.

5. The fan arrangement according to one of the preceding claims, **characterized in that** the fan arrangement (1) is used to cool the cooler assembly (1') using at least two air-cooled cooling elements (10; 20), wherein the cooling elements (10; 20) are disposed horizontally directly next to one another.

6. The fan arrangement according to claim 5, **characterized in that** the cooling elements (10; 20) are disposed perpendicularly to the air-flow direction +/- 20°.

7. The fan arrangement according to claim 5 or 6, **characterized in that** the first cooling element is a condenser (10), and the second cooling element, which is disposed adjacent thereto, is a coolant radiator (20).

8. The fan arrangement according to once of the claims 5 to 7, **characterized in that** the adjacently disposed cooling elements (10; 20) are arranged such that the narrow sides of the cooling elements (10; 20) facing one another are disposed substantially in the central longitudinal plane of the motor vehicle.

9. The fan arrangement according to one of the claims 5 to 8, **characterized in that** at least, one fan (30) is assigned to each cooling element (10; 20).

10. The fan arrangement according to one of the preceding claims, **characterized in that** the cooling elements (10; 20) and/or fans are tilted at an angle of maximum +/-20°, in particular +/- 10°, relative to the vertical.

11. The fan arrangement according to one of the preceding claims, **characterized in that** the axes of rotation of the fans (30) extend parallel to one another or intersect one another in front of the front bumper (50).

12. The fan arrangement according to one of the preceding claims, **characterized in that** the fan (30) is disposed on the air outflow side of the cooling elements (10; 20).

13. The fan arrangement according to one of the preceding claims 1 to 11, **characterized in that** the fan (30) is disposed on the air inflow side of the cooling elements (10; 20).

14. The fan arrangement according to one of the preceding claims, **characterised in that** a single, one-piece, continuous fan hood (31) is provided for at least two fans (30).

## Revendications

1. Agencement de ventilateurs pour un véhicule automobile (100), comportant au moins deux ventilateurs (30) qui servent au refroidissement d'un agencement de radiateurs (1') comportant au moins un radiateur (10 ; 20) et sont disposés dans au moins un capot de ventilateurs (31), où le capot de ventilateurs (31) présente au moins un volet à pression dynamique (32), où le volet à pression dynamique (32) ou les volets à pression dynamique (32), placé(s) sur un côté, est ou sont, par rapport au plan longitudinal médian du véhicule automobile, disposé(s) en moyenne plus près du plan longitudinal médian du véhicule automobile (100) que le ou les ventilateur (s) (30) du côté correspondant,
**caractérisé en ce que** les volets à pression dynamique sont disposés entre les ventilateurs.

2. Agencement de ventilateurs selon la revendication 1, **caractérisé en ce qu'**il est prévu plusieurs volets à pression dynamique (32), où plusieurs de ces volets à pression dynamique sont disposés sur une rangée s'étendant verticalement.

3. Agencement de ventilateurs selon la revendication 1 ou 2, **caractérisé en ce qu'**au moins un volet à pression dynamique (32) est disposé dans l'une des parties angulaires du capot de ventilateurs (31).

4. Agencement de ventilateurs selon l'une quelconque des revendications précédentes, **caractérisé en ce que** le capot de ventilateurs (31) est configuré en formant une seule et même pièce.

5. Agencement de ventilateurs selon l'une quelconque des revendications précédentes, **caractérisé en ce que** l'agencement de ventilateurs (1) sert au refroidissement de l'agencement de radiateurs (1') comportant au moins deux radiateurs (10 ; 20) refroidis par air, où les radiateurs (10 20) sont disposés horizontalement, directement l'un à côté de l'autre.

6. Agencement de ventilateurs selon la revendication 5, **caractérisé en ce que** les radiateurs (10 ; 20) sont disposés perpendiculairement à la direction d'arrivée d'air +/- 20°.

7. Agencement de ventilateurs selon la revendication 5 ou 6, **caractérisé en ce que** le premier radiateur est un condenseur (10) et le deuxième radiateur disposé à côté est un radiateur à liquide de refroidissement (20).

8. Agencement de ventilateurs selon l'une quelconque des revendications 5 à 7, **caractérisé en ce que** les radiateurs (10 ; 20) placés l'un à côté de l'autre sont disposés de manière telle, que les petits côtés des radiateurs (10 ; 20), qui sont tournés l'un vers l'autre, soient disposés pratiquement dans le plan longitudinal médian du véhicule automobile.

9. Agencement de ventilateurs selon l'une quelconque des revendications 5 à 8, **caractérisé en ce qu'**au moins un ventilateur (30) est associé à chaque radiateur (10 ; 20).

10. Agencement de ventilateurs selon l'une quelconque des revendications précédentes, **caractérisé en ce que** les radiateurs (10 ; 20) et / ou les ventilateurs sont inclinés par rapport à la verticale, suivant un angle au maximum de +/- 20°, en particulier de +/- 10°.

11. Agencement de ventilateurs selon l'une quelconque des revendications précédentes, **caractérisé en ce que** les axes de rotation des ventilateurs (30) sont disposés en s'étendant parallèlement ou en se croisant devant le pare-chocs (50).

12. Agencement de ventilateurs selon l'une quelconque des revendications précédentes, **caractérisé en ce que** les ventilateurs (30) sont disposes côté évacuation d'air des radiateurs (10 ; 20).

13. Agencement de ventilateurs selon l'une quelconque des revendications 1 à 11, **caractérisé en ce que** les ventilateurs (30) sont disposés côté alimentation d'air des radiateurs (10 ; 20).

14. Agencement de ventilateurs selon l'une quelconque des revendications précédentes, **caractérisé en ce qu'**il est prévu, pour au moins deux ventilateurs (30), un seul capot de ventilateurs (31) configuré de façon continue, en formant une seule et même pièce.
